Europäisches Patentamt

(19) European Patent Office

Office européen des brevets

(11) Publication number : **0 294 365 B1**

(12) **EUROPEAN PATENT SPECIFICATION**

(45) Date of publication of patent specification :
14.08.91 Bulletin 91/33

(51) Int. Cl.$^5$ : **B65D 23/08**

(21) Application number : 86901690.7

(22) Date of filing : 26.02.86

(86) International application number :
PCT/US86/00388

(87) International publication number :
WO 87/05276 11.09.87 Gazette 87/20

(54) PLASTIC CONTAINER WITH FLUID BARRIER LABEL.

(43) Date of publication of application :
14.12.88 Bulletin 88/50

(45) Publication of the grant of the patent :
14.08.91 Bulletin 91/33

(84) Designated Contracting States :
AT BE CH DE FR GB IT LI LU NL SE

(56) References cited :
EP-A- 0 190 009
US-A- 4 024 009
US-A- 4 183 441
US-A- 4 210 259
US-A- 4 219 124
US-A- 4 315 573

(56) References cited :
US-A- 4 342 399
US-A- 4 457 450
US-A- 4 567 681
US-A- 4 573 596

(73) Proprietor : PLASTIPAK PACKAGING INC.
9135 General Court
Plymouth, MI 48170 (US)

(72) Inventor : SLAT, William, A.
164 North Grand Pointe
Brooklyn, MI 49230 (US)

(74) Representative : Ben-Nathan, Laurence Albert
et al
Urquhart-Dykes & Lord 91 Wimpole Street
London W1M 8AH (GB)

## Description

### TECHNICAL FIELD

This invention relates to a container having improved resistance to the transmission of fluids such as liquids, vapors of the liquids, or other gases.

### BACKGROUND ART

One problem with plastic containers designed to hold liquids is that the containers are permeable to certain liquids and to gas vapors of the liquid, and other gases.

One specific example of the fluid transmission problem mentioned above involves plastic containers made from polyethylene terephthlate used to hold carbonated beverages. Transmission of $CO_2$ through the polyethylene terephthlate containers results in a loss of the carbonization and thus limits the shelf life of the container. Another specific problem involves liquor containers made from polyethylene terephthlate which is also permeable to $H_2O$ such that transmission of $H_2O$ of the liquor outwardly through the container reduces the volume of the container contents and simultaneously increases the proof level. Likewise, other plastics which have good resistance to the transmission of certain fluids are permeable to other fluids. For example, the transmission of $O_2$ into a plastic container affects flavor, color, and bacteria growth of food contents.

In order to overcome the fluid transmission problem mentioned above, one approach has been to coat the plastic container with a barrier material such as polyvinylidene cloride (PVDC). Such a coating has previously been applied by a dip method to the exterior of the container ; however, it has been found that this results in the fluid contents causing blistering of the coating and a consequent unsightly appearance as well as allowing the loss of some fluid contents. This outside coating also results in additional time and labor as well as problems involved with providing an even distribution of the coating.

In addition to the outside coating mentioned above, inside coating of the container with the barrier material has also been considered. However, such inside coating is difficult to perform and requires increased drying time. Furthermore, the inside coating can result in flaking of the coating and consequent contamination of the container contents as well as requiring the additional time and labor involved with the exterior coating.

Plastic sleeves have also been used over plastic containers such as shown by United States Patents 4,183,441 ; 4,219,124 ; 4,315,573 ; and 4,342,399 to provide labelling, seam strengthening, upright support of an unstable container, strengthening, and the resistance of fluid transmission by the use of a metal foil of the sleeve. However, such sleeves due to the cost involved and other reasons have never found widespread acceptance.

Plastic blow molding on a commercial level has recently incorporated the use of in-mold labelling to provide labelling of containers such as shown by United States Patents 3,108,850 ; 3,207,822 ; 3,292,209 ; 3,324,508 ; 3,608,020 ; 3,801,689 ; 3,986,807 ; 4,355,967 ; 4,359,314 ; 4,397,625 ; 4,479,770 ; 4,479,771 ; 4,479,644 ; 4,498,854 ; and 4,501,548. This in-mold labelling is performed by applying a label to the interior of the mold prior to the plastic blow molding process. The resultant blow molded article is then blown around the label and advantageously eliminates the necessity for a post labelling operation as has been required in the past. However, such in-mold labelling has not previously been capable of reducing the transmission of fluids through the container side wall. The disclose in US-A-3108850 provides the basis for the preamble of claim 1.

### DISCLOSURE OF INVENTION

An object of the present invention is to provide an improved container for reducing the transmission of fluids through the container side wall. In carrying out this object, the container is disclosed as being manufactured by an in-mold labelling operation during a plastic blow molding process so as to eliminate the necessity for any subsequent labelling after the blow molding and to also reduce the transmission of fluids through the container.

The invention provides a container as claimed in claim 1.

As mentioned above, the container is disclosed as being made by an in-mold labelling process during a plastic blow molding operation. This blow molding process forms a parison around a label previously positioned within the mold to provide the abruptly curved portions at the label edges in order to thereby provide the generally continuous outer surface at the junctions of the resultant side wall with the label edges. During the blowing, the heat involved activates the adhesive to permanently secure the label to the container side wall such that the barrier is capable of continually resisting the transmission of fluids through the side wall.

In one version, the label is made as a paper strip having an inner surface facing inwardly toward the container side wall. In one embodiment, the barrier is provided as a coating on the inner surface of the paper strip and the heat sensitive adhesive is provided as a coating between the barrier coating and the container side wall. In another embodiment of the paper strip label, the barrier is made of a plastic that resists the transmission of fluids and has an inner surface which functions as the heat sensitive adhesive that secures the label to the container side wall. The paper strip label is also disclosed as having the barrier and heat sensitive adhesive being plastics of different compositions that are dispersed within each other as a coating on the inner surface of the paper strip. Each version of the paper strip label is preferably disclosed as having an outer coating of lacquer for maintaining the label against marking.

The barrier of the container label is provided by a plastics material selected from the group consisting of polyvinylidene chloride, polypropylene, ethyl vinyl alcohol, acrylonitrile, or polyethylene terephthlate. A single type of one of these plastics may be used to provide the barrier for resisting the transmission of fluids. However, when it is necessary to resist the transmission of different types of fluids through the container, more than one type of plastic may be used with each other in order to resist the transmission of the fluids. This use of two or more plastics can be accomplished by dispersing plastics within each other as a single layer or by providing multiple layers of the different plastics depending upon the particular container application and the plastics involved.

In another version of the container, the label utilized is made from a plastic which defines the inner and outer surfaces of the label and functions as the barrier against the transmission of fluids. Depending upon the fluids involved with the contents to be held by the container, the plastic providing the label in this version is selected from the group consisting of polyvinylidene cloride, polypropylene, ethyl vinyl alcohol, acrylonitrile or polyethylene terephthlate. The heat sensitive adhesive is disclosed in one embodiment as being applied as a coating to the inner surface of the plastic label so as to adhere the label to the container side wall. In another embodiment, the heat sensitive adhesive is dispersed within the plastic of the plastic label. It is also possible for the plastic that provides the label barrier to have an inner surface which functions as the heat sensitive adhesive, which is one use for which polyvinylidene cloride is particularly suited.

The plastic label embodiment may be made from substantially only one type of plastic to provide the barrier for resisting the transmission of fluids. Alternatively, the plastic label may be made from more than one type of plastic, either by a dispersion of the different types of plastic within each other or by separate layers of the different plastics, to thereby provide the barrier for resisting transmission of different types of fluids through the label.

By using a pair of labels on oppositely facing sides of the container side wall it is possible to provide extensive label coverage over the side wall thereby minimizing the transmission of fluids which can take place through the container side wall.

The objects, features, and advantages of the present invention are readily apparent from the following detailed description of the best modes for carrying out the invention when taken in connection with the accompanying drawings.

## BRIEF DESCRIPTION OF DRAWINGS

Figure 1 is a sectional view through an open mold of a blow molding machine and is illustrated with a pair of labels being applied thereto in preparation for a blow molding process that provides a container constructed in accordance with the present invention ;

Figure 2 illustrates a parison that is positioned between the mold sections of the labelled mold in the open position in preparation for the blow molding process ;

Figure 3 illustrates the mold after closure thereof and a partial blowing of the parison during the blow molding process ;

Figure 4 illustrates the closed mold after completion of the blowing step of the blow molding process ;

Figure 5 illustrates the mold after the blown container has cooled sufficiently to permit mold opening for ejection of the blow molded container ;

Figure 6 is an elevational view taken partially in section through the container of the invention ;

Figure 7 is a partial plan view taken in section through the container ;

Figure 8 is a sectional view through the container side wall and one embodiment of the label made from paper ;

Figure 9 is a sectional view through the container side wall and another embodiment of the label made from paper ;

Figure 10 is a sectional view through the container side wall and one embodiment of the label made from plastic ; and

Figure 11 is a sectional view through the container side wall and another embodiment of the label made from plastic.

## BEST MODES FOR CARRYING OUT THE INVENTION

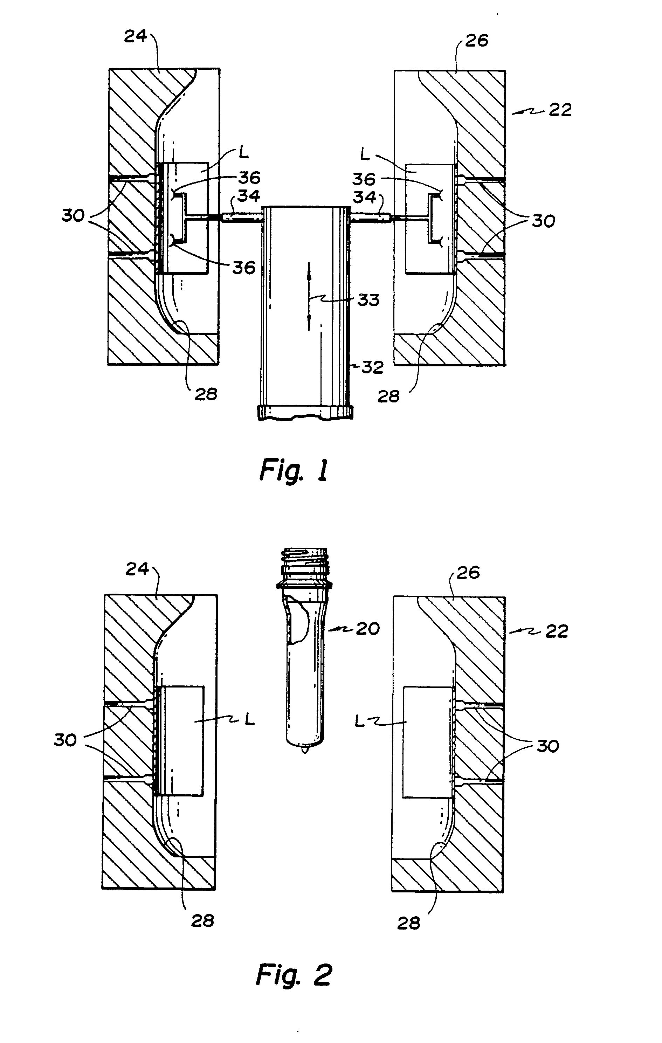

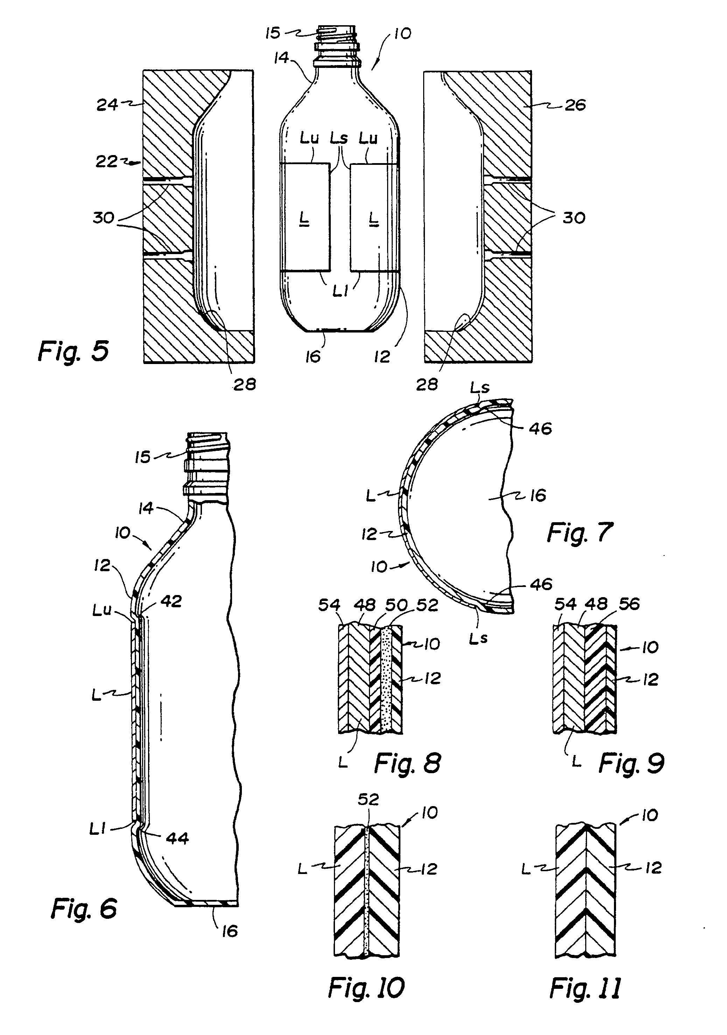

With reference to the drawings, plastic blow molding apparatus illustrated in Figures 1 through 4 performs an in-mold labelling operation and is utilized to manufacture a labelled container 10 constructed in accordance with this invention as illustrated in Figures 5 through 7. This container 10 includes labels L permanently adhered thereto to prevent the transmission of fluids through the container either inwardly or outwardly. Different types of plastic may be utilized to blow mold the container 10 as is hereinafter more fully described. Labels L of different constructions may be used to prevent the transmission of fluids in order to maintain the integrity of the contents after the initial filling of the container.

As illustrated in Figures 5 through 7, the container 10 has a side wall 12 that is illustrated as having a generally cylindrical shape in the disclosed embodiment. An upper neck 14 of the container extends upwardly from the side wall 12 to a spout 15 which is illustrated as being of the threaded closure type. A bottom 16 of the container extends downwardly from the side wall to close the container. As illustrated, a pair of the labels L are provided on the container side wall 12 between the upper neck 14 and the bottom 16.

With reference to Figure 2, the container is illustrated as being made from a heated plastic parison 20 that is illustrated as being of the injection preform type previously made by associated plastic injection molding equipment of the blow molding machine. However, it should be appreciated that the invention is also applicable to blow molding where the parison is made by extrusion or otherwise. The heated parison 20 illustrated is moved to the open mold 22 between the mold sections 24 and 26 in alignment with the mold cavity sections 28. Vacuum passages 30 in the mold cavity sections 24 and 26 allow for securement of the labels L which are deposited in the cavity sections 28 by an initial labelling operation.

As illustrated in Figure 1, the labelling operation is performed by a label dispenser 32 that is movable along the direction of arrow 33 between a withdrawn position and an inserted position as illustrated with respect to the open mold 22. Label carriers 34 are provided with vacuum passages extending to vacuum cups 36 utilized to secure the labels L. Retraction and extension of the label carriers 34 in a direction transverse to the direction of arrow 33 provides an initial transferring of the labels from associated label magazines to the vacuum cups with the label dispenser 32 in the withdrawn position which is not illustrated. After the initial label securement, the label carriers 34 are retracted and the label dispenser 32 is then moved to the inserted position where extension of the label carriers and termination of the vacuum drawn at vacuum cups 36 allows the vacuum drawn at the mold passages 30 to secure the labels in position. It is also possible to provide the vacuum cups 36 with a blast of positive pressure air that assists in releasing the labels. Retraction of the label carriers 34 and movement of the dispenser 32 to the withdrawn position in preparation for the next cycle is then followed by movement of the injection molded preform 20 to the position of Figure 2 as previously described in alignment with the mold cavity sections 28.

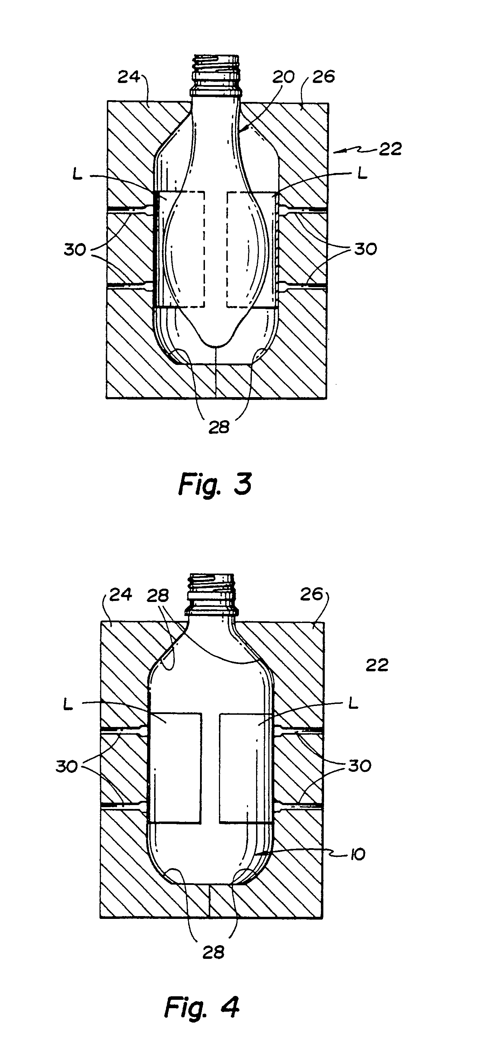

The blow molding process proceeds from the Figure 2 stage to the stage shown in Figure 3 as the mold 22 is closed by movement of the mold sections 24 and 26 toward each other to enclose the parison 20 within the cavity 28. Pressurized gas is then blown into the interior of the parison 20 to stretch the molten plastic in both axial and circumferential directions. It is also possible to initially axially stretch the parison 20 by a push rod to provide increased biaxial orientation that enhances the strength of the resultant container. The preform 20 thus moves downwardly and outwardly as illustrated to respectively provide the axial and circumferential stretching during the blow molding toward the final shape.

As illustrated in Figure 4, the blowing stage of the processing is completed when the resultant container 10 assumes the shape of the mold cavity 28 after having been blown around the labels L. The blown container is maintained within the closed mold 22 for a sufficient period of time to permit cooling of the container in the designed shape.

As illustrated in Figure 5, opening of mold 22 by movement of the mold sections 24 and 26 away from each other allows the blown container 10 to be ejected with the labels L secured thereto as is hereinafter more fully described. Thereafter, another pair of labels L are applied to the cavity sections 28 of the mold in the manner previously described as the next cycle commences.

As illustrated in Figures 5, 6, and 7, each label L extends partially around the side wall 12 of the blown container 10 and has side edges Ls spaced from each other in a circumferential direction. Each label L also has an upper edge Lu located below the neck 14 of the container and also has a lower edge Ll located above the bottom 16 of the container. The container side wall 12 as a result of the blowing process has abruptly curved portions 42, 44, and 46 respectively adjacent the upper, lower, and side edges of the label L to provide the container with a generally continuous outer surface at the junctions of the label edges with the side wall. As is hereinafter more fully described, the cross section of the label includes a barrier for resisting the transmission of fluids through the container side wall 12 and a heat sensitive adhesive that secures the label to the container side wall. The particular construction for providing the barrier and the adhesive will depend upon the particular application for which the container is to be used. However, regardless of the application, the reduction in the transmission of fluids through the container together with the continuous outer surface of the container side wall as a result of the abruptly curved portions 42, 44, and 46, and the economically manufacturing involved that eliminates subsequent labelling of the container provide an improved container over those previously available.

The construction of different embodiments of the label L is described below in connection with Figures 8 through 11. As described below, each label includes a barrier for resisting the transmission of fluids through the container side wall 12 and a heat sensitive adhesive that secures the label to the container side wall during the blow molding process.

As illustrated in Figure 8, one embodiment of the label L comprises a paper strip 48 having an inner surface including a barrier coating 50 for providing the barrier that resists the transmission of fluids through the container side wall 12. While different materials can be utilized to provide the barrier coating 50, polyvinylidene cloride (PVDC) works well to resist the transmission of $CO_2$ when the container 10 is made from polyethylene terephthlate and is designed to hold carbonated beverages. The heat sensitive adhesive is illustrated as being provided by a coating 52 that is a gel lacquer type heat seal which is sufficiently tacky to adhere the label to the container side wall 12 at about 70 degrees Centigrade. The parison 20 illustrated in Figure 2 is heated to a sufficient temperature in the range of about 75 to 125 degrees Centigrade in order to have sufficient heat to activate the adhesive 52 so that the label becomes permanently adhered to the container side wall 12. An outer surface of the paper label strip 48 is preprinted and is then covered by an outer coating 54 of lacquer that prevents marking of the label and otherwise maintains the label appearance.

With reference to Figure 9, another embodiment of the label L is illustrated as being of the type with a paper strip 48 as previously described. This paper label L has a plastic coating 56 applied to the inner surface of the paper strip 48. The coating 56 after the completion of the blow molding operation is in direct engagement with the container side wall 12 and may be made in either of two different ways. Coating 56 in one version may be made from a plastic, such as polyvinylidene cloride, which functions as the barrier for resisting the transmission of fluids and has an inner surface which functions as the heat sensitive adhesive for securing the label to the container side wall. Likewise, other plastics that are resistant to the transmission of fluids and become tacky upon application of heat will also function in the dual role of providing the barrier and the heat sensitive adhesive for securing the label. In the other version, the coating 56 is made from a barrier plastic that is dispersed throughout with a heat sensitive adhesive of a different composition. With both versions of the coating 56 on the inner surface of the label paper strip 48, the outer surface of the paper strip 48 is provided with the lacquer coating 54 as previously described in connection with the embodiment of Figure 8.

With each of the embodiments of the paper label L illustrated in Figures 8 and 9, the barrier is provided by a plastic whose composition for best results depends upon the fluid contents for which the container is designed to hold. This plastic is advantageously selected from the group consisting of polyvinylidiene chloride, polypropylene, ethyl vinyl alcohol, acrylonitrile or polyethylene terephthlate. Polyvinylidene cloride has been found to give very good results in resisting the transmission of $H_2O$ and also functions well in resisting the transmission of $CO_2$ outwardly through container as well as preventing $O_2$ from passing into the container. Polypropylene functions well in resisting the passage of $H_2O$ and thus

advantageously can be utilized to prevent $H_2O$ from passing through plastic bottles made of polyethylene terephthlate to hold alcoholic beverages. While regular polypropylene functions well, it has been found that oriented polyethylene not only functions better but has better clarity if a transparent label is desired. Moreover, polypropylene functions better than polyethylene to prevent the transmission of $H_2O$. Ethyl vinyl alcohol resists the transmission of $CO_2$ and $O_2$ better than polyvinylidene cloride but has less resistance to the transmission of $H_2O$. Acrylonitrile also functions well in resisting the transmission of $CO_2$ and $O_2$ but does not function quite as well as polyvinylidene cloride in resisting the transmission of $H_2O$. Polyethylene terephthlate has resistance to the transmission of $O_2$ but, as mentioned above, is not particularly resistant to the transmission of $H_2O$ or $CO_2$.

With the paper strip type of labels L illustrated in Figures 8 and 9 as described above, a single type of plastic may be used to provide the barrier for resisting the transmission of fluids. It is also possible to use more than one type of plastic in order to provide the barrier for resisting the type of fluids if a single plastic will not provide resistance to all of the fluids necessary for any particular application.

With reference to Figures 10 and 11, two different embodiments are illustrated of the label L made from plastic which defines the inner and outer surfaces of the label and functions as the barrier against the transmission of fluids. With each of these embodiments as with the barriers of the previously described paper labels, the labels are made from a plastic selected from the group consisting of polyvinylidene cloride, polypropylene, ethyl vinyl alcohol, acrylonitrile, or polyethylene terephthlate whose properties are each mentioned above in connection with the paper labels.

In the Figure 10 embodiment of the plastic label L, a heat sensitive adhesive coating 52 is applied to the inner surface of the plastic label. As with the paper label illustrated in Figure 8, the coating 52 of heat sensitive adhesive may be provided by a gel lacquer although it is also possible to use other heat sensitive adhesives such as polyvinylidene cloride or any other heat sensitive adhesive that will function for the particular application involved.

The plastic label L illustrated in Figure 11 has its inner surface directly engaged with the container side wall 12 and can be manufactured in two different ways. In one version, the heat sensitive adhesive is dispersed within the barrier plastic of the label. In another version, the plastic that provides the barrier resistant to fluid transmission has an inner surface which functions as the heat sensitive adhesive.

Each of the embodiments of the plastic label illustrated in Figures 10 and 11 may be made from substantially only one type of plastic to provide the barrier for resisting the transmission of fluids. It is also possible for the plastic label to be made from more than one type of plastic to provide the barrier for resisting the transmission of fluids. When more than one type of plastic is utilized, the different types of plastics can be dispersed within each other or may be provided as separate layers.

It should be noted that certain types of plastic are not particularly adherent to each other. In such cases, the different layers of barrier plastic can be provided with an intermediate layer of a suitable adhesive film that bonds the barrier layers to each other.

With each of the embodiments illustrated in Figures 8, 9, 10, and 11, polyvinylidene cloride is one heat sensitive adhesive that can be used primarily as the barrier or as both the barrier for resisting the transmission of fluids and as the heat sensitive adhesive.

## Claims

1. A container (10) comprising : a side wall (12) ; an upper neck (14) that extends upwardly from the side wall ; a bottom (16) that extends downwardly from the side wall to close the container ; a label (L) adhered to the side wall (12) ; the label extending partially around the side wall and having an upper edge (Lu) located below the neck (14) of the container and a lower edge (Ll) located above the bottom (16) of the container ; said container side wall (12) having abruptly curved portions adjacent the edges (Lu ; Ll ; Ls) of the label to provide the container with a generally continuous outer surface at the junctions of the label edges with the side wall ; characterized in that a pair of labels (L), each of which has a uniform thickness, are provided on the side wall (12) with each label (L) extending partially around the side wall (12) and with the side edges (Ls) of each label being spaced from the side edges of the other label so that the container has abruptly curved portions adjacent the upper, lower and each side edge of each label ; and in that each label includes a barrier for resisting the transmission of fluids through the container side wall ; said barrier being a plastics material selected from the group consisting of polyvinylidene chloride, polypropylene, ethyl vinyi alcohol, acrylonitrile and polyethylene terephthalate ; and a heat sensitive adhesive that secures each label to the container side wall.

2. A container according to Claim 1 wherein the label (L) comprises a paper strip having an inner surface including a plastic coating for providing the barrier, and the heat sensitive adhesive being provided as a coating located between the plastics barrier coating and the container side wall.

3. A container according to Claim 1 wherein the label (L) comprises a paper strip having an inner surface including a plastics coating for providing the barrier, and the plastics barrier coating having an inner surface that functions as the heat sensitive adhesive securing the label to the container side wall.

4. A container according to Claim 1 wherein the label (L) comprises a paper strip having an inner surface, and the barrier and the heat sensitive adhesive being plastics of different compositions that are dispersed within each other as a coating on the inner surface of the paper strip.

5. A container according to Claim 2, 3 or 4 wherein the paper strip label (L) has an outer coating of lacquer.

6. A container according to Claim 1 wherein a single type of plastics material is used to provide the barrier for resisting the transmission of fluids.

7. A container according to Claim 1 wherein more than one type of plastics material is used to provide the barrier for resisting the transmission of fluids.

8. A container according to Claim 1 wherein the label is made from plastics material and the heat sensitive adhesive is a plastics coating applied to the inner surface of the plastics label.

9. A container according to Claim 1 wherein the label (L) is made from plastics material and the heat sensitive plastics adhesive is a plastic dispersed within the plastics material of the plastics label.

10. A container according to Claim 1 wherein the label (L) is made from plastics material and the plastics material that provides the barrier having an inner surface which functions as the heat sensitive adhesive.

11. A container according to Claim 1 wherein the label is made from substantially only one type of plastics material to provide the barrier for resisting the transmission of fluids.

12. A container according to Claim 1 wherein the plastics label is made from more than one type of plastics material to provide the barrier for resisting the transmission of fluids.

13. A container according to Claim 1 wherein the heat sensitive adhesive is polyvinylidene chloride.

## Patentansprüche

1. Kunstoffbehälter (10),bestehend aus einer Seitenwandung (12), einem an der Seitenwandung nach oben sich erstrekkenden Behälterhals (14) sowie einen von der Seitenwandung nach abwärts sich erstreckenden, den Behälter verschliessenden Behälterboden (16), ferner einem an die Seitenwandung (12) festgeklebten Etikett (L), welches sich teilweise um die Seitenwandung erstreckt und dabei eine unterhalb des Behälterhalses (14) des Behälters angeordnete obere Kante (Lu) und eine oberhalb des Behälterbodens (16) des Behälters angeordnete untere Kante (Ll) bildet, wobei die Seitenwandung (12) im Bereich der Kanten (Lu, Ll, Ls) der Etikette abrupt gekrümmte Bereiche aufweist, so daß der Behälter an den Übergangsstellen der Etikettkanten mit der Seitenwandung eine kontinuierliche äußere Oberfläche bildet, dadurch **gekennzeichnet**, daß die Seitenwandung (12) mit einem Paar von Etiketten (L) gleichförmiger Dicke versehen ist, wobei jede Etikette (L) sich teilweise um die Seitenwandung (12) herum erstreckt und die seitlichen Kanten (Ls) jeder Etikette gegenüber den Seitenkanten der anderen Etikette einen Abstand bilden, so daß der Behälter abrupt gekrümmte Bereiche im Bereich der oberen, unteren und Seitenkanten jeder Etikette bildet, und daß jede Etikette eine Trennschicht aufweist, welche gegenüber einem Durchdringen von Medien durch die Seitenwandung des Behälters widerstandsfähig ist, wobei diese Trennschicht aus einem Kunststoffmaterial der Gruppe von Polyvinylidenchlorid, Polypropylenethylvinylalkohol, Acrylonitril und Polyethylenterephthalat gewählt ist, und daß schließlich ein wärmeempfindlicher Klebstoff vorgesehen ist, mit welchem die Etiketten an der Seitwandung befestigt sind.

2. Kunststoffbehälter nach Anspruch 1, dadurch gekennzeichnet, daß die Etikette (L) aus einem Papierstreifen besteht, welcher eine kunststoffbeschichtete Innenoberfläche aufweist, die die Trennschicht ergibt und daß der wärmeempfindliche Klebstoff als Beschichtung zwischen der Kunststoffbeschichtung und der Seitenwandung des Behälters vorgesehen ist.

3. Kunststoffbehälter nach Anspruch 1, dadurch gekennzeichnet, daß die Etikette (L) aus einem Papierstreifen besteht, welcher auf seiner Innenoberfläche mit einer Kunststoffbeschichtung versehen ist, die die Trennschicht ergibt und daß diese Kunststoffbeschichtung eine Innenoberfläche aufweist, welche als wärmeempfindlicher Klebstoff zur Befestigung der Etikette an der Seitenwandung des Behälters dient.

4. Kunststoffbehälter nach Anspruch 1, dadurch gekennzeichnet, daß die Etikette (L) aus einem Papierstreifen mit einer Innenoberfläche besteht, und daß die Trennschicht und der wärmeempfindliche Klebstoff Kunststoffmaterialien unterschiedlicher Zusammensetzungen sind, die miteinander dispergiert auf der Innenoberfläche des Papierstreifens als Beschichtung aufgetragen sind.

5. Kunststoffbehälter nach Anspruch 2, 3 oder 4, dadurch gekennzeichnet, daß die aus einem Papierstreifen bestehende Etikette (L) eine äußere Beschichtung aus Lack aufweist.

6. Kunststoffbehälter nach Anspruch 1, dadurch gekennzeichnet, daß eine einzige Art von Kunststoffmaterial verwendet ist, um die gegenüber Medien widerstandsfähige Trennschicht zu bilden.

7. Kunststoffbehälter nach Anspruch 1, dadurch gekennzeichnet, daß mehr als eine Art von Kunststoffmaterial verwendet ist, um die gegenüber einer Durchlässigkeit von Medien widerstandsfähige Trennschicht zu bilden.

8. Kunststoffbehälter nach Anspruch 1, dadurch gekennzeichnet, daß die Etikette aus einem Plastikmaterial hergestellt ist, und daß der wärmeempfindliche Klebstoff eine Kunststoffbeschichtung ist, welche auf der Innenoberfläche der Kunststoffetikette aufgebracht ist.

9. Kunststoffbehälter nach Anspruch 1, dadurch gekennzeichnet, daß die Etikette (L) aus einem Kunststoffmaterial besteht und daß der wärmeempfindliche Klebstoff ein Plastikmaterial ist, welches innerhalb des Plastikmaterials der Kunststoffetikette dispergiert ist.

10. Kunststoffbehälter nach Anspruch 1, dadurch gekennzeichnet, daß die Etikette (L) aus einem Plastikmaterial besteht und daß das die Trennschicht bildende Plastikmaterial eine Innenoberfläche aufweist, welche als wärmeempfindlicher Klebstoff dient.

11. Kunststoffbehälter nach Anspruch 1, dadurch gekennzeichnet, daß die Etikette im wesentlichen aus einer einzigen Art von Kunststoffmaterial hergestellt ist, um auf diese Weise die gegenüber einer Durchlässigkeit von Medien widerstandsfähige Trennschicht zu bilden.

12. Kunststoffbehälter nach Anspruch 1, dadurch gekennzeichnet, daß die Kunststoffetikette aus mehr als einer Art von Kunststoffmaterial hergestellt ist, um auf diese Weise die gegenüber einer Durchlässigkeit von Medien widerstandsfähige Trennschicht zu bilden.

13. Kunststoffbehälter nach Anspruch 1, dadurch gekennzeichnet, daß der wärmeempfindliche Klebstoff Polyvinylidenchlorid ist.

**Revendications**

1. Conteneur (10) comportant : une paroi latérale (12) ; un col supérieur (14) qui s'étend vers le haut depuis la paroi latérale ; un fond (16) qui s'étend vers le bas depuis la paroi latérale pour clore le conteneur; une étiquette (L) adhérant à la paroi latérale (12) ; l'étiquette s'étendant partiellement autour de la paroi latérale et présentant un bord supérieur (Lu) situé sous le col (14) du conteneur et un bord inférieur (LI) situé au-dessus du fond (16) du conteneur ; ladite paroi latérale (12) du conteneur présentant des portions brusquement incurvées près des bords (Lu ; Li; Ls) de l'étiquette pour donner au conteneur une surface extérieure généralement continue aux jonctions des bords de l'étiquette avec la paroi latérale ; conteneur caractérisé par le fait qu'une paire d'étiquettes (L), dont chacune a une épaisseur uniforme, sont prévues sur la paroi latérale (12), chaque étiquette (L) s'étendant partiellement autour de la paroi latérale (12) et les bords latéraux (Ls) de chaque étiquette étant espacés des bords latéraux de l'autre étiquette de sorte que le conteneur présente des portions brusquement incurvées près du bord supérieur, du bord inférieur et de chaque bord latéral de chaque étiquette ; et par le fait que chaque étiquette contient une barrière pour résister à la transmission des fluides à travers la paroi latérale du conteneur ; ladite barrière étant un matériau plastique choisi parmi le groupe comportant le chlorure de polyvinylidène, le polypropylène, l'alcool éthylvinylique, l'acrylonitrile et le téréphthalate de polyéthylène ; et contient aussi un adhésif sensible à la chaleur qui fixe chaque étiquette à la paroi latérale du conteneur.

2. Conteneur selon la revendication 1, dans lequel l'étiquette (L) est constituée d'une bande de papier dont une surface intérieure présente un revêtement plastique pour donne la barrière, l'adhésif sensible à la chaleur étant prévu sous forme d'un revêtement placé entre le revêtement formant barrière plastique et la paroi latérale du conteneur.

3. Conteneur selon la revendication 1, dans lequel l'étiquette (1) est constituée d'une bande de papier dont la surface intérieure présente un revêtement plastique pour donner la barrière, le revêtement formant barrière plastique présentant une surface intérieure qui joue le rôle d'un adhésif sensible à la chaleur fixant l'étiquette à la paroi latérale du conteneur.

4. Conteneur selon la revendication 1, dans lequel l'étiquette (L) est constituée d'une bande de papier présentant une surface intérieure, la barrière et l'adhésif, sensible à la chaleur, étant des plastiques de compositions différentes qui sont dispersés, l'un à l'intérieur de l'autre, sous forme d'un revêtement sur la surface intérieure de la bande de papier.

5. Conteneur selon la revendication 2, 3 ou 4, dans lequel l'étiquette (L) constituée de la bande de papier comporte un revêtement extérieur en laque.

6. Conteneur selon la revendication 1 dans lequel un unique type de matériau plastique est utilisé pour rendre la barrière résistante à la transmission des fluides.

7. Conteneur selon la revendication 1, dans lequel plus d'un seul type de matériau plastique est utilisé pour rendre la barrière résistance à la transmission des fluides.

8. Conteneur selon la revendication 1, dans lequel l'étiquette est faible en un matériau plastique et dans lequel l'adhésif sensible à la chaleur est un revêtement plastique appliqué à la surface intérieure de l'étiquette plastique.

9. Conteneur selon la revendicadion 1, dans lequel l'étiquette (L) est faible en un matériau plastique et dans lequel l'adhésif plastique sensible à la chaleur est un plastique dispersé à l'intérieur du matériau plastique de l'étiquette plastique.

10. Conteneur selon la revendication 1, dans lequel l'étiquette (L) est faible en un matériau plastique et dans lequel le matériau plastique gui donne la barrière présente une surface intérieure qui joue le rôle d'un adhésif sensible à la chaleur.

11. Conteneur selon la revendication 1, dans lequel l'étiquette est faible pratiquement d'un seul type de matériau plastique pour donner la barrière pour résister à la transmission des fluides.

12. Conteneur selon la revendication 1, dans lequel l'étiquette plastique est faible de plus d'un seul type de matériau plastique pour donner la barrière pour résister à la transmission des fluides.

13. Conteneur selon la revendication 1, dans lequel l'adhésif sensible à la chaleur est le chlorure de polyvinylidène.

*Fig. 1*

*Fig. 2*

**Fig. 3**

**Fig. 4**

Fig. 5

Fig. 6

Fig. 7

Fig. 8

Fig. 9

Fig. 10

Fig. 11